## Europäisches Patentamt
## European Patent Office
## Office européen des brevets

(11) Veröffentlichungsnummer: **0 127 571**
**B1**

(12) # EUROPÄISCHE PATENTSCHRIFT

(45) Veröffentlichungstag der Patentschrift:
**28.01.87**

(51) Int. Cl.⁴: **F 16 G 15/00**

(21) Anmeldenummer: **84730056.3**

(22) Anmeldetag: **23.05.84**

(54) **Bauteil für Rundgliederketten.**

(30) Priorität: **27.05.83 DE 3319774**

(43) Veröffentlichungstag der Anmeldung:
**05.12.84 Patentblatt 84/49**

(45) Bekanntmachung des Hinweises auf die Patenterteilung:
**28.01.87 Patentblatt 87/5**

(84) Benannte Vertragsstaaten:
**AT GB IT SE**

(56) Entgegenhaltungen:
**AT - A - 352 486**
**DE - A - 2 249 596**
**DE - A - 2 433 345**
**DE - U - 6 903 899**
**FR - A - 1 559 227**
**GB - A - 2 088 520**
**US - A - 3 333 412**

(73) Patentinhaber: **RUD-Kettenfabrik Rieger & Dietz GmbH u. Co., Friedensinsel, D-7080 Aalen 1 (DE)**

(72) Erfinder: **Smetz, Reinhard, Silcherstrasse 17, D-8860 Baldingen (DE)**
Erfinder: **Speich, Helmut, Jahnstrasse 51, D-7081 Hüttlingen (DE)**

(74) Vertreter: **Böning, Manfred, Dr. Ing. et al, Patentanwälte Dipl.-Ing. Dieter Jander Dr. Ing. Manfred Böning Kurfürstendamm 66, D-1000 Berlin 15 (DE)**

ACTORUM AG

**Beschreibung**

Die Erfindung betrifft ein für den Einsatz in Verbindung mit Rundgliederketten bestimmtes Bauteil, insbesondere Verkürzungsorgan, mit einem Einführschlitz für ein bei belasteter Kette mit seiner Längsachse in Richtung der Kette orientiertes Kettenglied, mit den Einführschlitz begrenzenden Stützarmen für Teile des bogenförmigen Endes eines auf das in den Einführschlitz eingeführte Kettenglied folgenden Kettengliedes und mit einem gegen die Wirkung einer Feder verschiebbaren Verriegelungselement zur formschlüssigen Verriegelung eines in den Einführschlitz eingehängten Kettengliedes.

Aus der GB-A 2088520 ist ein als Verkürzungsklaue ausgebildetes Bauteil der vorstehenden Art bekannt, bei dem oberhalb einer verhältnismässig tiefen Stützmulde für ein abzustützendes Kettenglied ein quer zum Einführschlitz verlaufendes Verriegelungselement angeordnet ist, das durch eine Feder in eine Verriegelungsstellung gedrückt wird, in der es gegen eine Rundung des sich im Einführschlitz befindlichen Kettengliedes anliegt. Die bekannte Verkürzungsklaue vermag insofern nicht zu befriedigen, als das Einhängen eines abzustützenden Kettengliedes in die Stützmulde einen vergleichsweise grossen Leerhub voraussetzt und beim Einhängen eine gesonderte Betätigung des Verriegelungselementes durch den Benutzer unumgänglich ist.

Ein praktisch leerhubfreies Einhängen eines Kettengliedes ist bei einem anderen aus der DE-U 6903899 bekannten als Verkürzungsorgan ausgebildeten Bauteil mit einem winkelförmigen Grundkörper möglich. Dabei ist in einem Schenkel des Grundkörpers ein Einführschlitz angeordnet und der andere Schenkel mit einer sich an das offene Ende des Einführschlitzes anschliessenden Durchziehöffnung für die Glieder einer Rundgliederkette versehen. Durch die winkelförmige Ausbildung dieses bekannten Bauteils wird das in den Einführschlitz eingehängte Kettenglied bei auf die Rundgliederkette ausgeübter Zugkraft in seiner Lage gehalten. Bei lockerer Kette ist keine Gewähr dafür gegeben, dass das in den Einführschlitz eingehängte Kettenglied seine Lage mit Sicherheit beibehält, d.h. nicht in die Durchziehöffnung rutscht. Ein ungewolltes Entfernen des genannten Kettengliedes aus seiner Position ist möglich, wenn ein verkürzter Kettenstrang unter Last um eine Ecke gezogen wird und sich dabei die Aussenfläche der Übergangszone zwischen den Schenkeln des Bauteiles gegen die Ecke abstützt. Dieses Bauteil ist so gestaltet, dass die Durchziehöffnung und der Einführschlitz unter einem Winkel von etwa 90° stehen. Die Winkelform bedingt beim Verkürzen eines Kettenstranges eine Schwenkbewegung des Bauteiles, die nur unter gleichzeitiger Verlagerung von mit dem Bauteil unlösbar verbundenen weiteren Teilen möglich ist.

Bekannt ist ausserdem aus der DE-OS 2743932 ein als Kettenauslöseverschluss ausgebildetes Bauteil, dessen eines Ende einen Einführschlitz für ein Kettenglied und den Einführschlitz seitlich begrenzenden Stützarme für ein auf das in den Einführschlitz eingeführte Kettenglied folgendes Kettenglied aufweist. Eine Sicherung des in den Einführschlitz jeweils eingeführten Kettengliedes bei lockerer Kette fehlt bei diesem Bauteil.

Ein als Verkürzungshaken ausgebildetes Bauteil mit einer Sicherung gegen ungewolltes Aushängen eines abgestützten Kettengliedes ist aus der DE-AS 2826966 bekannt. Dieses Bauteil verfügt über einen grundsätzlich anderen Aufbau als Bauteile der in Betracht gezogenen Gattung. Bei ihm wird nicht das bogenförmige Ende eines Kettengliedes sondern ein Längsschenkel eines Kettengliedes abgestützt, das zuvor selbst in den Einführschlitz eingeführt wurde und in dessen Grund aufliegt. Zur Sicherung des abgestützten Kettengliedes dient ein im Hals des hakenförmigen Grundkörpers dieses Bauteils federnd gelagerter Bolzen, der beim Einführen des Kettengliedes in den Führungsschlitz durch die Längsschenkel des Kettengliedes zweimal automatisch in eine Freigabestellung gedrückt wird.

Aus der DE-A 2249596 ist schliesslich eine Sicherheits-Hakenkupplung bekannt, die zum Verbinden von Fahrzeugen mit Anhängern dient. Diese Hakenkupplung weist einen Haken mit einem Einführschlitz auf, dessen Öffnung durch ein Ende eines federnden Verriegelungselementes automatisch versperrt wird, nachdem die Gliedrundung eines Kettengliedes in die zwischen dessen Gliedschenkel ragende Hakenzinke eingehängt worden ist.

Der Erfindung liegt die Aufgabe zugrunde, bei einem Bauteil der gattungsgemässen Art mit einer formschlüssigen Sicherung gegen ungewolltes Aushängen das Verriegelungselement in einer Weise anzuordnen, die eine einfache Handhabung des Bauteiles ermöglicht und bei der das Verriegelungselement ein seitliches Herausziehen des sich im Führungsschlitz befindlichen Kettengliedes verhindert, ohne dass die Gefahr seiner Deformation besteht.

Diese Aufgabe wird erfindungsgemäss dadurch gelöst, dass die Längsachse des Verriegelungselementes in einem der Stützarme schräg zum Einführschlitz verläuft, dass das Verriegelungselement in der Verriegelungsstellung lediglich mit einem Teil seines Umfanges zwischen die Längsschenkel des in den Einführschlitz eingeführten Kettengliedes ragt und einen Längsschenkel verriegelt, dass die dem zu verriegelnden Längsschenkel gegenüberliegende Seite des Verriegelungselementes sich am Stützarm abstützt und dass das in den Einführschlitz einzuführende Kettenglied das Verriegelungselement gegen die Kraft der es beaufschlagenden Feder vorübergehend verlagert.

Das erfindungsgemässe Bauteil bietet den Vorteil, dass es eine leichte Handhabbarkeit und eine einwandfreie Sicherung des in den Einführschlitz eingehängten Kettengliedes auch bei gelockertem Kettenstrang gewährleistet. Die Gefahr eines Verbiegens des zwischen die Längsschenkel des zu sichernden Kettengliedes ragenden Verriegelungselementes besteht nicht. Das Verriegelungselement lässt sich beim Einführen des Kettengliedes in den Einführschlitz durch das einzuführende Kettenglied selbst betätigen, was zur Bequemlichkeit der Handhabung beiträgt.

Weitere Merkmale der Erfindung ergeben sich aus den Unteransprüchen und der nachfolgenden Beschreibung mehrerer in der beigefügten Zeichnung dargestellter Ausführungsbeispiele. Es zeigen:

Figur 1 die Vorderansicht eines als Verkürzungsklaue ausgebildeten Bauteiles,

Figur 2 teilweise im Schnitt die Seitenansicht des Bauteiles gemäss Figur 1,

Figur 3 einen Schnitt durch Teile des Bauteiles gemäss Figuren 1 und 2,

Figur 4 einen der Figur 3 entsprechenden Schnitt durch ein Bauteil mit abgewandelten Verriegelungselementen,

Figur 5 die Vorderansicht eines weiteren als Verkürzungsorgan ausgebildeten Bauteiles,

Figur 6 einen Schnitt durch das Bauteil gemäss Figur 1,

Figur 7 einen Schnitt längs der Linie VII-VII in Figur 6,

Figur 8 einen Schnitt längs der Linie VIII-VIII in Figur 6,

Figur 9 die Vorderansicht eines modifizierten Bauteiles der in den Figuren 5 bis 8 dargestellten Art,

Figur 10 einen Schnitt durch das Bauteil gemäss Figur 9,

Figur 11 einen Schnitt längs der Linie XI-XI in Figur 10,

Figur 12 einen Schnitt längs der Linie XII-XII in Figur 10,

Figur 13 schematisch die Anwendung zweier Bauteile der in den Figuren 9 bis 12 dargestellten Art,

Figur 14 die Draufsicht auf ein weiteres Bauteil,

Figur 15 einen Schnitt längs der Linie XV-XV in Figur 14,

Figur 16 eine Einzelheit des Bauteiles gemäss Figur 14,

Figur 17 die Anwendung eines Bauteiles der in den Figuren 14 bis 16 dargestellten Art,

Figur 18 die Vorderansicht eines weiteren Bauteiles und

Figur 19 teilweise im Schnitt die Seitenansicht des Bauteiles gemäss Figur 18.

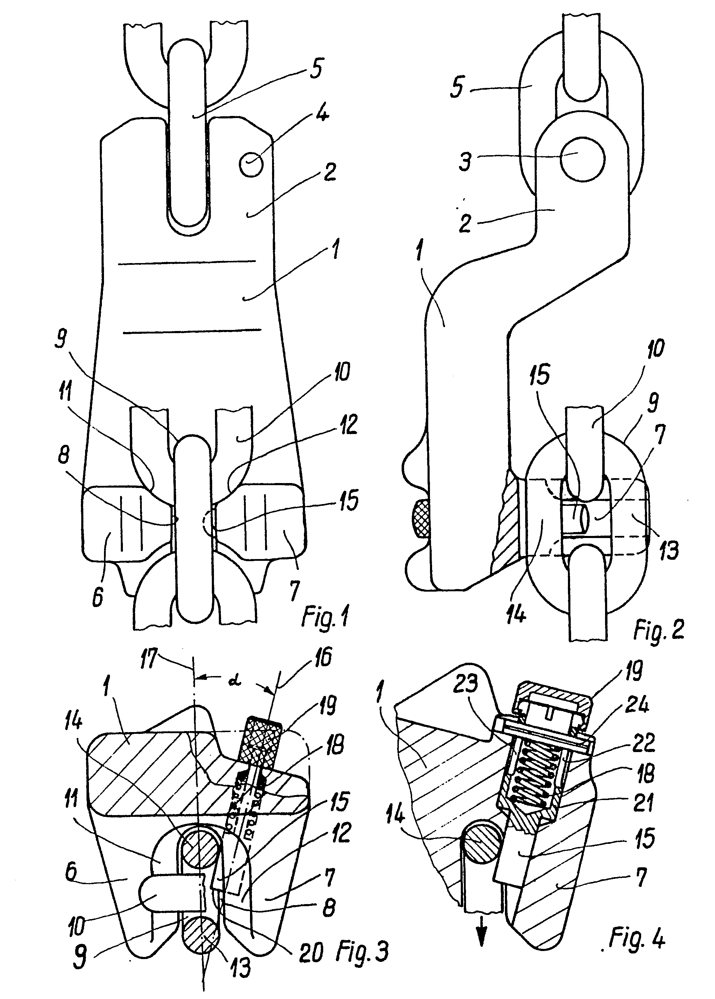

In den Figuren 1 bis 3 ist ein Bauteil mit einem Grundkörper 1 gezeigt, der an seinem oberen Ende einen Gabelkopf 2 aufweist, an dem mit Hilfe eines Haltebolzens 3, der durch einen Sicherungsstift 4 gesichert ist, das Endglied 5 eines Kettenstranges befestigt ist. An seinem dem Gabelkopf 2 abgewandten Ende weist der Grundkörper 1 zwei Stützarme 6 und 7 auf, die von im wesentlichen senkrecht zum unteren Ende des Grundkörpers stehenden Vorsprüngen gebildet werden. Die Stützarme 6 und 7 begrenzen eine Einführschlitz 8 für ein Kettenglied 9 eines Kettenstranges. Das auf das Kettenglied 9 folgende Kettenglied 10 stützt sich mit Teilen seines bogenförmigen Endes auf Stützflächen 11 und 12 der Stützarme 6 und 7 ab. Zwischen die Längsschenkel 13 und 14 des Kettengliedes 9 ragt ein Teil des Umfanges eines Verriegelungselementes 15, dessen Längsachse 16 zur Achse 17 des Einführschlitzes 8 einen spitzen Winkel einnimmt, der vorzugsweise 15° beträgt. In der Verriegelungsstellung nimmt das Verriegelungselement 15 die in den Figuren 1 bis 3 dargestellte Lage ein, in der es durch eine Feder 18 gehalten wird. 19 ist ein als Kopf ausgebildetes Betätigungsorgan, auf das eine Zugkraft ausgeübt werden kann, um das Verriegelungselement 15 entgegen der Wirkung der Feder 18 aus seiner Verriegelungsstellung zu entfernen, in der es den Längsschenkel 14 des Kettengliedes 9 blockiert.

Beim Einführen des Kettengliedes 9 in den Einführschlitz 8 drückt der Längsschenkel 14 des Kettengliedes 9 gegen das freie Ende 20 des Verriegelungselementes und überführt dieses in eine Position, in der es den Einführschlitz freigibt.

Die dargestellte und beschriebene Anordnung des Verriegelungselementes erlaubt einerseits ein Einführen des Längsschenkels 14 in den Einführschlitz 8 unter geringem Kraftaufwand; andererseits gewährleistet sie eine sichere Verriegelung des Längsschenkels 14 in der Verriegelungsstellung. Der zur Verriegelung des Längsschenkels 14 dienende Abschnitt des Verriegelungselementes 15 ist so im Stützarm 7 abgestützt, dass eine Deformation infolge Biegekräfte ausscheidet. Andererseits ist das Lösen des Verriegelungselementes ebenfalls leicht durchführbar.

Figur 4 zeigt eine Variante des Bauteiles gemäss Figuren 1 und 2. Für einander entsprechende Teile wurden gleiche Bezugszeichen verwendet. Bei der Variante gemäss Figur 4 kann das auch hier mit 15 bezeichnete Verriegelungselement von einer Seite montiert werden. Es besitzt zu diesem Zweck einen zylindrischen Ansatz 21 zur Aufnahme der Feder 18 und Schlitze 22 und 23 zur Aufnahme einer Spannhülse 24, die das Verriegelungselement im Grundkörper 1 hält. Man erkennt auch in Figur 4 die einwandfreie Abstützung des zum Verriegeln des Längsschenkels 14 dienenden Abschnittes des Verriegelungselementes 15 am Stützarm 7.

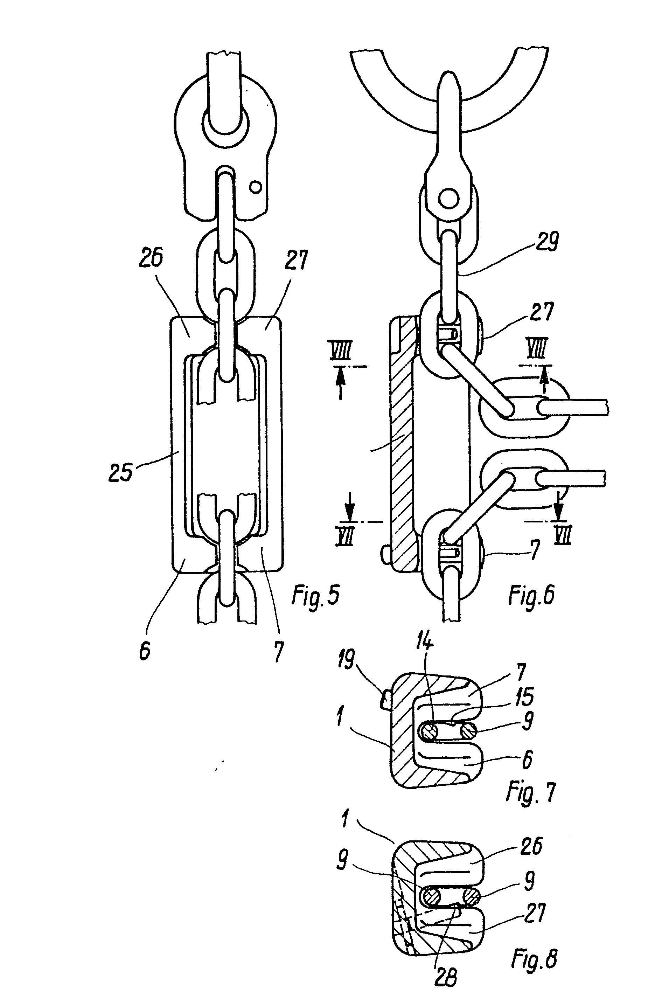

Die Figuren 5 bis 8 zeigen ein Bauteil mit einem Grundkörper 25, der an seinen beiden Enden mit Stützarmen 6 und 7 bzw. 26 und 27 versehen ist. Im Stützarm 7 ist auch hier ein Verriegelungselement 15 der zuvor beschriebenen Art für den Längsschenkel 14 eines Kettengliedes 9 gelagert.

Im Stützschenkel 27 dagegen ist ein Verriegelungselement 28 angeordnet, das durch einen Sicherungsstift ständig in der Verriegelungsposition gehalten wird. Eine Anordnung der vorstehenden Art wählt man, wenn der Grundkörper 25 an einem festen Punkt des Kettenstranges 29 verbleiben soll. Der Abstand zwischen den Stützarmen 6, 7 einerseits und den Stützarmen 26, 27 andererseits ist gleich einem ungeraden Vielfachen der Teilung der Kettenglieder des Kettenstranges 29.

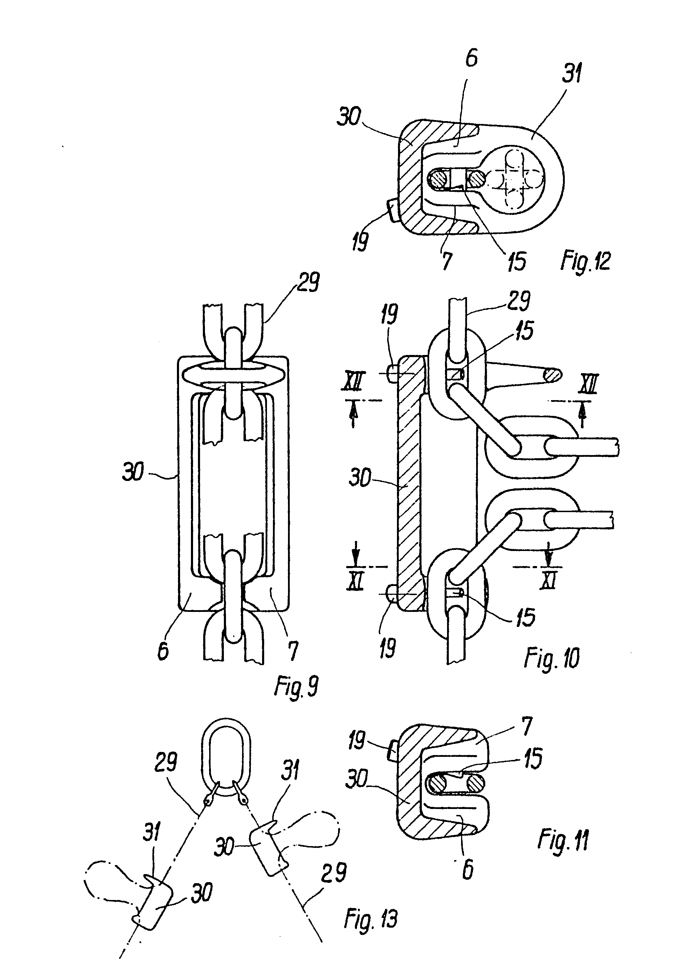

Ein Bauteil, welches sich auf einem Kettenstrang 29 hin und her verschieben lässt, ist in den Figuren 9 bis 12 wiedergegeben. Es besitzt einen Grundkörper 30, an dessen Enden Paare von Stützarmen 6 und 7 mit Verriegelungselementen 15 angeordnet sind, die wiederum Betätigungsorgane 19 aufweisen. Zur Sicherung des in den Figuren 9 bis 12 dargestellten Bauteiles am Kettenstrang dient ein Führungsbügel 31. Auch in diesem Fall ist der Abstand zwischen den Stützarmpaaren gleich einem ungeraden Vielfachen der Teilung der Glieder des Kettenstranges 29.

Figur 13 zeigt, wie der Grundkörper 30 an unterschiedlichen Stellen von Kettensträngen 29 positioniert werden kann.

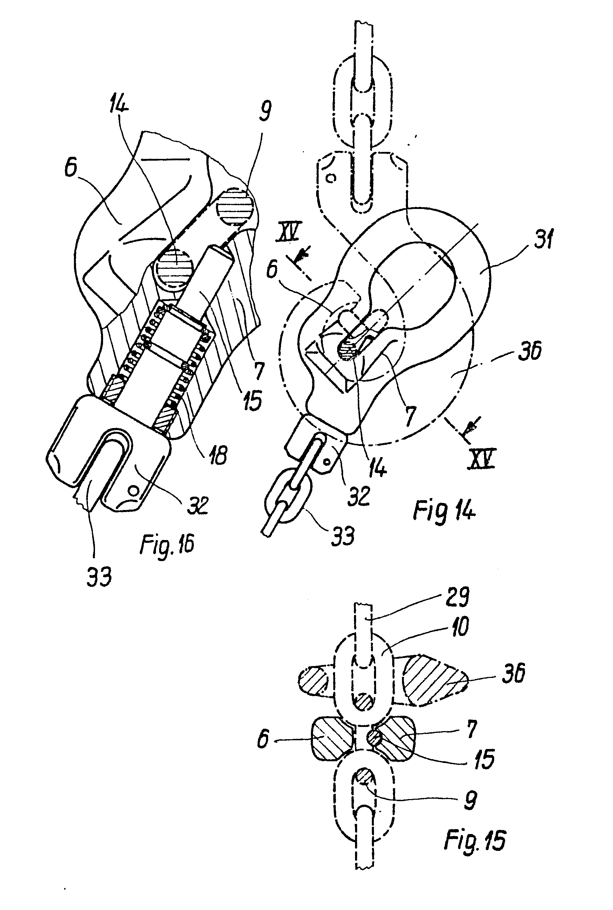

In den Figuren 14 bis 16 ist ein weiteres Bauteil mit einem Führungsbügel 31 dargestellt. Dieses Bau-

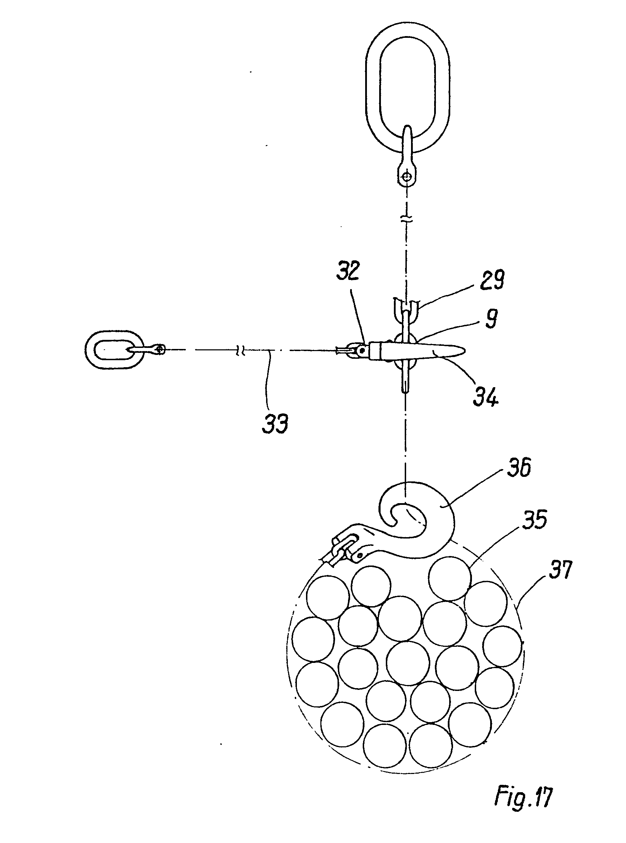

teil eignet sich besonders für den Einsatz im Zusammenhang mit Ketten zum Bündeln von Lasten, wie es in Figur 17 angedeutet ist. Das Verriegelungselement 15 besitzt an seinem zur Verriegelung dienenden Abschnitt abgewandten Ende einen Gabelkopf 32 zur Befestigung eines von einer Kette gebildeten Zugorganes 33. Das Zugorgan ermöglicht eine Fernbedienung des Verriegelungselementes 15. Wie aus Figur 17 erkennbar, ist der Grundkörper 34 des Bauteiles gemäss Figuren 14 bis 16 keilförmig ausgebildet. Dies erleichtert bei Bedarf das Überführen des Kettengliedes 9 in den Bereich des Bügels 31. In der Praxis wird mit dem Kettenstrang 29 ein Bündel von Lasten 35 unter Zuhilfenahme eines Schnürhakens 36 aufgenommen. Anschliessend bewegt man das Bauteil mit dem Grundkörper 34 in die unmittelbare Nähe des Schnürhakens 36 (vgl. Figur 15). Die Folge ist, dass das Bauteil ein ungewolltes Lösen der die Lasten 35 umgebenden Schlinge 37 verhindert. Erst wenn die Freigabe der Last erwünscht ist, wird ein Zug auf das Zugorgan 33 ausgeübt und das Verriegelungselement 15 aus seiner Sperrstellung entfernt. Der Kettenstrang 29 kann danach durch die Öffnung des Schnürhakens 36 zwecks Erweiterung der Schlinge 37 bewegt werden. Da das Lösen der Schlinge 37 mit Hilfe eines Zugorgans 33 möglich ist, kann ein Sicherheitsabstand zur Last eingehalten werden.

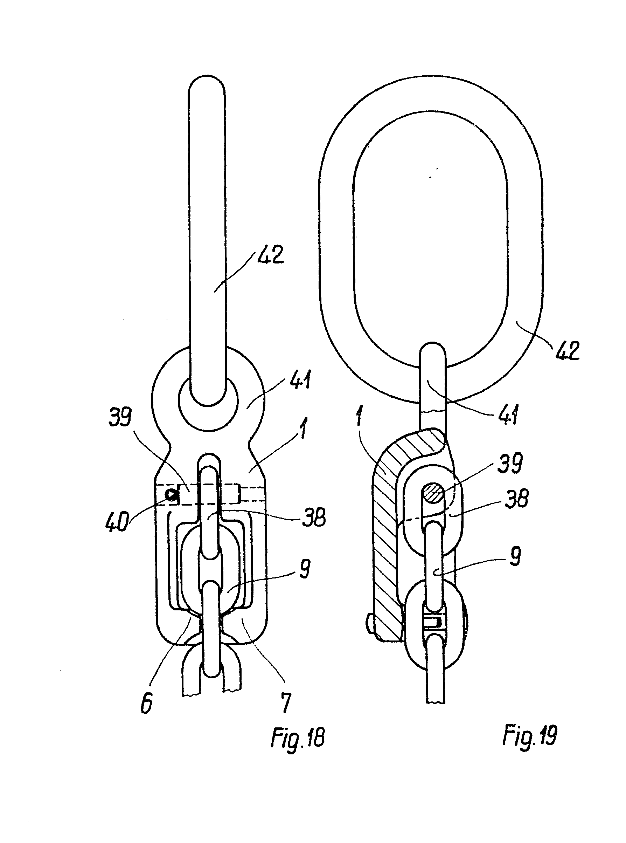

Das Bauteil gemäss Figuren 18 und 19 entspricht weitgehend dem Bauteil gemäss Figuren 1 bis 3, für ähnliche Teile werden daher gleiche Bezugszeichen verwendet. Es besitzt einen Grundkörper 1 mit Stützarmen 6 und 7 für ein Kettenglied 9 einer Rundgliederkette, deren Endglied 38 durch einen Haltebolzen 39 gehalten wird, der durch eine Spannhülse 40 in seiner Sollage gehalten wird. Am äussersten Ende ist der Grundkörper 1 mit einer Öse 41 versehen, in die ein Aufhänge- oder Übergangsglied 42 eingeschweisst ist.

**Patentansprüche**

1. Für den Einsatz in Verbindung mit Rundgliederketten bestimmtes Bauteil, insbesondere Verkürzungsorgan, mit einem Einführschlitz (8) für ein bei belasteter Kette mit seiner Längsachse in Richtung der Kette orientiertes Kettenglied (9), mit den Einführschlitz (8) begrenzenden Stützarmen (6, 7) für Teile des bogenförmigen Endes eines auf das in den Einführschlitz (8) eingeführte Kettenglied (9) folgenden Kettengliedes (10) und mit einem gegen die Wirkung einer Feder verschiebbaren Verriegelungselement (15) zur formschlüssigen Verriegelung eines in den Einführschlitz eingehängten Kettengliedes, dadurch gekennzeichnet, dass die Längsachse (16) des Verriegelungselementes (15) in einem der Stützarme (6, 7) schräg zum Einführschlitz (8) verläuft, dass das Verriegelungselement (15) in der Verriegelungsstellung lediglich mit einem Teil seines Umfanges zwischen die Längsschenkel (13, 14) des in den Einführschlitz (8) eingeführten Kettengliedes (9) ragt und einen Längsschenkel (14) verriegelt, dass die dem zu verriegelnden Längsschenkel (14) gegenüberliegende de Seite des Verriegelungselementes (15) sich am Stützarm (7) abstützt und dass das in den Einführschlitz (8) einzuführende Kettenglied (9) das Verriegelungselement (15) gegen die Kraft der es beaufschlagenden Feder (18) vorübergehend verlagert.

2. Bauteil nach Anspruch 1, dadurch gekennzeichnet, dass der zur Verriegelung des Längsschenkels (14) dienende Abschnitt des Verriegelungselementes (15) sich auf seiner ganzen Länge am Stützarm (7) abstützt.

3. Bauteil nach Anspruch 1 oder 2, dadurch gekennzeichnet, dass die Längsachse (16) des Verriegelungselementes (15) zum Einführschlitz (8) einen spitzen Winkel (α) einnimmt, der grösser als 6° und kleiner als 30° ist.

4. Bauteil nach Anspruch 3, dadurch gekennzeichnet, dass der spitze Winkel (α) etwa 15° beträgt.

5. Bauteil nach einem der Ansprüche 1 bis 4, dadurch gekennzeichnet, dass das Verriegelungselement (15) ein Bolzen ist.

6. Bauteil nach einem der Ansprüche 1 bis 5, dadurch gekennzeichnet, dass das Verriegelungselement (15) in der Verriegelungsstellung gegen die Mitte des einen Längsschenkels (14) des in den Einführschlitz (8) eingehängten Kettengliedes (9) anliegt.

7. Bauteil nach einem der Ansprüche 1 bis 6, dadurch gekennzeichnet, dass die Stützarme (6, 7; 26, 27) von im wesentlichen geraden Vorsprüngen eines Grundkörpers (1; 25; 30) gebildet werden.

8. Bauteil nach Anspruch 7, dadurch gekennzeichnet, dass die Stützarme (6, 7; 26, 27) eine im wesentlichen senkrecht zum Grundkörper (1; 25; 30) angeordnete Stützgabel bilden.

9. Bauteil nach Anspruch 7 oder 8, dadurch gekennzeichnet, dass der Grundkörper (1) an seinem den Stützarmen (6, 7) abgewandten Ende mit einem zur Aufnahme eines Haltebolzens (3) dienenden Gabelkopf (2) versehen ist.

10. Bauteil nach Anspruch 7 oder 8, dadurch gekennzeichnet, dass der Grundkörper (1) an seinem den Stützarmen (6, 7) abgewandten Ende mit einem Haltebolzen (39) für das Endglied (38) einer einzuhängenden Rundgliederkette sowie mit einer Öse (41) über ein Aufhänge- oder Übergangsglied (42) versehen ist.

11. Bauteil nach Anspruch 7 oder 8, dadurch gekennzeichnet, dass der Grundkörper (25, 30) an zwei sich gegenüberliegenden Enden mit Paaren von Stützarmen (6, 7; 26, 27) versehen ist.

12. Bauteil nach Anspruch 11, dadurch gekennzeichnet, dass die Paare von Stützarmen (6, 7; 26, 27) einen Abstand voneinander haben, der gleich einem ungeraden Vielfachen der Teilung der Glieder der Rundgliederkette (29) ist.

13. Bauteil nach einem der Ansprüche 1 bis 12, dadurch gekennzeichnet, dass das Verriegelungselement (15) mit einem zu seiner Fernbedienung dienenden Zugorgan (33) verbunden ist.

14. Bauteil nach einem der Ansprüche 1 bis 13, dadurch gekennzeichnet, dass die Enden der Stützarme (6, 7) durch einen im wesentlichen in einer Ebene mit ihnen liegenden Führungsbügel (31) für die Rundgliederkette (29) miteinander verbunden sind.

15. Bauteil nach Anspruch 14, dadurch gekennzeichnet, dass die Stützarme (6, 7) und der Führungsbügel (31) sich keilförmig zum den Stützarmen (6, 7) abgewandten Ende verjüngen.

## Claims

1. Component, particularly shortening element, intended for use in conjunction with round link chains, with an introduction slot (8) for a link (9) oriented with its longitudinal axis in the direction of the chain when the chain is under load, with bracing arms (6, 7) limiting the introduction slot (8) and supporting parts of the arcuate end of a link (10) following the link (9) introduced into the introduction slot (8) and with a locking element (15) slidable counter to the action of a spring for the positive locking of a link engaged in the introduction slot, characterized in that the longitudinal axis (16) of the locking element (15) is oriented in one of the bracing arms (6, 7) transversely to the introduction slot (8), that the locking element (15) in the locking position projects with only a part of its circumference between the longitudinal members (13, 14) of the link (9) introduced into the introduction slot (8) and locks a longitudinal member (14), that the side of the locking element (15) opposite the longitudinal member (14) to be locked is braced against the bracing arm (7), and that the link (9) to be introduced into the introduction slot (8) temporarily displaces the locking element (15) counter to the force of the spring (18) stressing it.

2. Component according to Claim 1, characterized in that the section of the locking element (15) which serves for locking the longitudinal member (14) is braced along its total length against the bracing arm (7).

3. Component according to Claim 1 or 2, characterized in that the longitudinal axis (16) of the locking element (15) forms an acute angle ($\alpha$) which is greater than 6° and smaller than 30°, with the introduction slot (8).

4. Component according to Claim 3, characterized in that the acute angle ($\alpha$) is approximately 15°.

5. Component according to any of Claims 1 to 4, characterized in that the locking element (15) is a bolt.

6. Component according to any of Claims 1 to 5, characterized in that the locking element (15) in the locking position abuts against the centre of the one longitudinal member (14) of the link (9) engaged in the introduction slot (8).

7. Component according to any of Claims 1 to 6, characterized in that the bracing arms (6, 7; 26, 27) are formed by substantially straight projections of a basic element (1; 25; 30).

8. Component according to Claim 7, characterized in that the bracing arms (6, 7; 26, 27) form bracing forks arranged substantially at right angles to the basic element (1; 25; 30).

9. Component according to Claims 7 or 8, characterized in that the basic element (1) is provided at its end remote from the bracing arms (6, 7) with a fork head (2) serving to accommodate a retaining bolt (3).

10. Component according to Claims 7 or 8, characterized in that the basic element (1) is provided at its end remote from the bracing arms (6, 7) with a retaining bolt (39) for the end link (38) of a round link chain to be engaged, and also with an eye (41) for a suspension element or transition element (42).

11. Component according to Claims 7 or 8, characterized in that the basic element (25, 30) is provided at two mutually opposite ends with pairs of bracing arms (6, 7; 26, 27).

12. Component according to Claim 11, characterized in that the pairs of bracing arms (6, 7; 26, 27) have a mutual interval which is equal to an odd multiple of the pitch of the links of the round link chain (29).

13. Component according to any of Claims 1 to 12, characterized in that the locking element (15) is connected to a traction element (33) serving for its remote actuation.

14. Component according to any of Claims 1 to 13, characterized in that the ends of the bracing arms (6, 7) are mutually connected by a guide yoke (31), located substantially in one plane with them, for the round link chain (29).

15. Component according to Claim 14, characterized in that the bracing arms (6, 7) and the guide yoke (31) taper in wedge-shaped configuration towards the end remote from the bracing arms (6, 7).

## Revendications

1. Elément de chaîne à maillons ronds, plus particulièrement, un élément de raccourcissement, comprenant une rainure d'insertion (8) pour un maillon (9) dont l'axe longitudinal est orienté dans le sens de la chaîne quand celle-ci est tendue, des bras-support (6, 7) délimitant la rainure d'insertion (8) et supportant des parties de l'extrémité arquée d'un maillon (10) suivant le maillon (9) inséré dans la rainure d'insertion (8) et un organe de verrouillage (15) mobile à l'encontre de l'action d'un ressort pour bloquer par verrouillage un maillon accroché dans la rainure d'insertion, caractérisé en ce que l'axe longitudinal (16) de l'organe de verrouillage (15) se déplace dans l'un des bras-support (6, 7) obliquement par rapport à la rainure d'insertion (8), en ce qu'uniquement une partie du contour de l'organe de verrouillage (15) s'étend lorsque ce dernier est en position de verrouillage entre les portions longitudinales (13, 14) du maillon (9) inséré dans la rainure d'insertion (8) et en bloque une portion longitudinale (14), en ce que la face de l'organe de verrouillage (15) opposée à la portion longitudinale (14) à bloquer repose sur le bras-support (7) et en ce que le maillon (9) à insérer dans la rainure d'insertion (8) temporairement déplace l'organe de verrouillage (15) à l'encontre de la force du ressort (18) qui l'actionne.

2. Elément de chaîne selon la revendication 1, caractérisé en ce que la partie de l'organe de verrouillage (15) servant à bloquer la portion longitudinale (14) repose par la totalité de sa longueur sur le bras-support (7).

3. Elément de chaîne selon la revendication 1 ou 2, caractérisé en ce que l'axe longitudinal (16) de l'organe de verrouillage (15) forme par rapport à la rainure d'insertion un angle aigu (α) compris entre 6° et 30°.

4. Elément de chaîne selon la revendication 3, caractérisé en ce que l'angle aigu (α) est d'environ 15°.

5. Elément de chaîne selon l'une des revendications 1 à 4, caractérisé en ce que l'organe de verrouillage (15) est une tige.

6. Elément de chaîne selon l'une des revendications 1 à 5, caractérisé en ce que l'organe de verrouillage (15) dans sa position de verrouillage repose sur le milieu de l'une des portions longitudinales (14) du maillon (9) accroché dans la rainure d'insertion (8).

7. Elément selon l'une des revendications 1 à 6, caractérisé en ce que les bras-supports (6, 7; 26, 27) sont constitués par des saillies essentiellement rectilignes d'un corps principal (1; 25; 30).

8. Elément de chaîne selon la revendication 7, caractérisé en ce que les bras-supports (6, 7; 26, 27) forment une fourche de support essentiellement perpendiculaire au corps principal (1; 25; 30).

9. Elément de chaîne selon la revendication 7 ou 8, caractérisé en ce que le corps principal (1), à son extrémité dirigée vers les bras-supports (6, 7), est muni d'une tête fourchue (2) destinée à recevoir un goujon de retenue (3).

10. Elément selon la revendication 7 ou 8, caractérisé en ce que l'extrémité du corps principal (1) dirigée vers les bras-support (6, 7) est munie d'un goujon de retenue (39) pour le maillon d'extrémité (38) d'une chaîne à maillons ronds à accrocher ainsi que d'un oeil (41) traversant un maillon de suspension ou de raccord (42).

11. Elément selon la revendication 7 ou 8, caractérisé en ce que le corps principal (25, 30) est muni de bras-support (6, 7; 26, 27) sur deux extrémités opposées l'une à l'autre.

12. Elément de chaîne selon la revendication 11, caractérisé en ce que les couples de bras-support (6, 7; 26, 27) sont à une distance l'un de l'autre égale à un multiple impair du pas des maillons de la chaîne à maillons ronds (29).

13. Elément de chaîne selon l'une des revendications 1 à 12, caractérisé en ce que l'organe de verrouillage (15) est relié à un organe de traction (33) pour sa commande à distance.

14. Elément de chaîne selon l'une des revendications 1 à 13, caractérisé en ce que les extrémités des bras-support (6, 7) sont reliées l'une à l'autre par un archet (31) de guidage de la chaîne à maillons ronds (29), essentiellement coplanaire aux-dites extrémités.

15. Elément de chaîne selon la revendication 14, caractérisé en ce que les bras-support (6, 7) et l'archet de guidage (31) se rétrécissent en forme de coin vers l'extrémité du côté des bras-support (6, 7).

Fig. 1

Fig. 2

Fig. 3

Fig. 4

Fig.5

Fig.6

Fig. 7

Fig.8

Fig. 12

Fig. 9

Fig. 10

Fig. 11

Fig. 13

Fig. 16

Fig 14

Fig. 15

Fig.17

Fig.18

Fig.19